# EUROPÄISCHE PATENTANMELDUNG

(11) **EP 1 419 919 A1**
(43) Veröffentlichungstag der Anmeldung: **19.05.2004**
(21) Anmeldenummer: 03025742.2
(22) Anmeldetag: 10.11.2003
(51) Int. Cl.: B60J 10/00

(54) **Dichtung, insbesondere zum Abdichten einer Tür, einer Fensterscheibe oder des Dachs eines Kraftfahrzeugs**

(30) Priorität: 12.11.2002 DE 10252595
(71) Anmelder: Metzeler Automotive Profile Systems GmbH, 88131 Lindau/Bodensee (DE)
(72) Erfinder: Heyden, Knut, 88175 Scheidegg (DE); Sterk, Thomas, 88069 Tettnang (DE)
(74) Vertreter: Schober, Christoph D.

(57) **Zusammenfassung**

Eine Dichtung, insbesondere zum Abdichten einer Tür, einer Fensterscheibe oder des Dachs eines Kraftfahrzeugs, ist mit einem Grundkörper (10) versehen, der aus einem ersten elastisch verformbaren Werkstoff gefertigt ist. Der Grundkörper (10) weist einen Dichtungsabschnitt (11) und einen Befestigungsabschnitt (12) auf. Der Befestigungsabschnitt (12) ist mit einem Adhäsionskörper (20) verbunden ist, durch den der Grundkörper (10) stoffschlüssig an einem Bauteil (30) festlegbar ist. Um eine in wirtschaftlicher Hinsicht vergleichsweise kostengünstige Herstellung zu erzielen, besteht der Adhäsionskörper (20) aus einem zweiten elastisch verformbaren Werkstoff, der über eine zellige Struktur verfügt, und weist eine Kontaktfläche (21) auf, auf die ein Klebstoff (22) aufgetragen ist. Der Grundkörper (10) und der Adhäsionskörper (20) sind koextrudiert.

## Beschreibung

Die Erfindung betrifft eine Dichtung, die insbesondere zum Abdichten einer Tür, einer Fensterscheibe oder des Dachs eines Kraftfahrzeugs dient. Die Dichtung ist mit einem Grundkörper versehen, der aus einem ersten elastisch verformbaren Werkstoff gefertigt ist und einen Dichtungsabschnitt sowie einen Befestigungsabschnitt aufweist. Der Befestigungsabschnitt ist mit einem Adhäsionskörper verbunden, durch den der Grundkörper stoffschlüssig an einem Bauteil festlegbar ist.

Eine derartige Dichtung wird in der DE 37 40 913 A1 beschrieben. Die bekannte Dichtung dient dazu, die Tür eines Kraftfahrzeugs abzudichten. Zu diesem Zweck ist die Dichtung an einer Fläche der Tür mittels eines Klebestreifens befestigt. Der Klebestreifen ist ein einseitig mit Klebstoff versehenes Klebeband, das an der Unterseite der Dichtung angebracht ist und vor Montage der Dichtung abgezogen wird, um den an der Unterseite der Dichtung anhaftenden Klebstoff freizugeben. Nachteilig bei der bekannten Dichtung ist, daß das einseitig wirkende Klebeband nur eine Art an Klebstoff trägt, dessen Bindefähigkeit von dem Werkstoff der zu fügenden Bauteile abhängt. Die sich ergebende unterschiedliche Vernetzung des Klebstoffs mit der aus einem gummielastischen Werkstoff bestehenden Dichtung einerseits und der in der Regel aus Metall bestehenden Tür andererseits kann unter bestimmten Beanspruchungsbedingungen zu einem Abscheren der Dichtung führen.

Im Stand der Technik sind ferner doppelseitige Klebebänder bekannt, die mit zwei unterschiedlichen Klebstoffen versehen sind, um eine Anpassung an die Vernetzungseigenschaften der zu fügenden Bauteile zu ermöglichen. So offenbart die DE 100 64 386 A1 ein Klebeband, das ein Trägerelement aufweist, welches an gegenüberliegenden Seiten mit einer ersten und einer zweiten Klebefläche versehen ist. Die erste Klebefläche dient dazu, das Klebeband an einer aus Silikon bestehenden Dichtung zu befestigen. Zu diesem Zweck ist auf die erste Klebefläche ein mit der Dichtung vernetzender Silikonkleber aufgetragen. Demgegenüber ist auf die zweite Klebefläche ein Acrylatklebstoff aufgetragen, der eine stoffschlüssige Verbindung mit beispielsweise einem aus Metall oder Glas bestehenden Deckel des Schiebedachs eines Kraftfahrzeugs eingeht. Die zweite Klebefläche wird von einer Schutzfolie bedeckt, die bei der Montage der Dichtung abgezogen wird. Das doppelseitige Klebeband und die Dichtung werden separat gefertigt und anschließend miteinander verbunden, um eine vorgefertigte Baueinheit zu bilden. Die Dichtung wird in einem ersten Verfahrensschritt kontinuierlich extrudiert, und das Klebeband wird in einem zweiten Verfahrensschritt auf der ersten Klebefläche mit dem Silikonkleber beschichtet. In einem dritten Verfahrensschritt wird die mit dem Silikonkleber beschichtete erste Klebefläche in Kontakt mit der Dichtung gebracht, wohingegen in einem vierten Verfahrensschritt der Silikonkleber durch Temperatur- und/oder Druckeinwirkung mit der Dichtung vernetzt wird. Die Befestigung des Klebebands an der Dichtung ist demzufolge mit einem vergleichsweise hohen und in wirtschaftlicher Hinsicht kostenintensiven Aufwand verbunden.

Um die Befestigung eines doppelseitigen Klebebands an einer aus einem elastomeren Werkstoff bestehenden Dichtung zu vereinfachen, ist in der EP 0 721 862 B1 ein Verfahren vorgeschlagen worden, bei der das Klebeband im Durchlaufverfahren an der Dichtung befestigt und die Dichtung anschließend einer formgebenden Vulkanisation unterzogen wird. Das bekannte Verfahren sieht vor, die Dichtung bei der Vulkanisation lokal zu kühlen, um zu verhindern, daß das separat gefertigte und beispielsweise aus Acrylschaumstoff bestehende Klebeband auf Grund der bei der Vulkanisation entstehenden Wärme beschädigt wird.

Der Erfindung liegt die Aufgabe zugrunde, eine Dichtung der eingangs genannten Art dahingehend weiterzubilden, daß sich eine in wirtschaftlicher Hinsicht vergleichsweise kostengünstige Herstellung erzielen läßt.

Zur Lösung dieser Aufgabe ist bei einer Dichtung mit den oben genannten Merkmalen in Übereinstimmung mit Anspruch 1 erfindungsgemäß vorgesehen, daß der Adhäsionskörper aus einem zweiten elastisch verformbaren Werkstoff besteht, der über eine zellige Struktur verfügt, und eine Kontaktfläche aufweist, auf die ein Klebstoff aufgetragen ist, wobei der Grundkörper und der Adhäsionskörper koextrudiert sind.

Die erfindungsgemäße Dichtung zeichnet sich durch einen in den Grundkörper integrierten Adhäsionskörper aus. Die Integration des Adhäsionskörpers ergibt sich durch die Koextrusion von Grundkörper und Adhäsionskörper, die eine kontinuierliche und damit kostengünstige Fertigung erlaubt. Die zellige Struktur des zweiten elastisch verformbaren Werkstoffs, aus dem der Adhäsionskörper besteht, gewährleistet eine gute Bindefähigkeit des auf die Kontaktfläche des Adhäsionskörpers aufgetragenen Klebstoffs und trägt damit zu einer verhältnismäßig hohen Tragfähigkeit der Klebstoffverbindung bei. Die Bindefähigkeit des Klebstoffs läßt sich zudem erhöhen, wenn die Kontaktfläche des Adhäsionskörpers vor Auftragen des Klebstoffs aufgerauht wird. Die in wirtschaftlicher Hinsicht kostenintensive Befestigung eines separaten Klebestreifens an der Dichtung ist somit entbehrlich.

Vorteilhafte Ausgestaltungen der erfindungsgemäßen Dichtung stellen die Gegenstände der Ansprüche 2 bis 8 dar.

So ist es von Vorteil, wenn der zweite elastisch verformbare Werkstoff Zellgummi ist. Zellgummi, ein Kautschuk mit überwiegend geschlossenzelliger Struktur, ermöglicht eine gleichmäßige Benetzbarkeit der Kontaktfläche durch den Klebstoff und stellt somit eine gute Bindefähigkeit sicher.

Von Vorteil ist ferner, wenn der erste elastisch verformbare Werkstoff ein thermoplastisches Elastomer (TPE), Ethylen-Propylen-Dien-Kautschuk (EPDM) oder ein siliciumhaltiger Kunststoff ist, um dem Grundkörper und damit dem Dichtungsabschnitt eine zuverlässige Dichtwirkung gewährleistende Eigenschaften, wie beispielsweise hohe Temperaturbeständigkeit und ausreichende Verformungsfähigkeit, zu verleihen.

Bevorzugt ist der Klebstoff dauerklebrig, um eine einfache Montage der Dichtung an einem Bauteil, wie beispielsweise dem Rahmen einer Tür eines Kraftfahrzeugs, zu gewährleisten. Der Klebstoff kann einkomponentig, wie beispielsweise Epoxidharz, oder zweikomponentig, wie beispielsweise Polyurethanharz, sein und in Abhängigkeit von dem jeweiligen Anwendungsfall unter Druck- und/oder Wärmeeinwirkung abbinden. In Hinsicht auf eine praxisgerechte Ausgestaltung ist die Kontaktfläche zweckmäßigerweise mit einer lösbaren Schutzfolie bedeckt, die vor allem bei einem dauerklebrigen Klebstoff eine einfache Handhabung sicherstellt.

Bevorzugt ragt die Kontaktfläche des Adhäsionskörpers aus der Ebene des Befestigungsabschnitts vor. Der verformbare Adhäsionskörper trägt auf diese Weise zu einer Kompensation von Unebenheiten zwischen der Kontaktfläche und einer Montagefläche des Bauteils, an dem die Dichtung anzubringen ist, bei. Eigenspannungen der Klebeverbindung, die zu einer Verminderung der Bindefestigkeit führen, lassen sich somit weitgehend vermeiden.

In einer bevorzugten Ausgestaltung der erfindungsgemäßen Dichtung weist der Befestigungsabschnitt eine Befestigungslippe auf, an welcher der Adhäsionskörper angeordnet ist. Die Befestigungslippe, die beispielsweise an einem Türrahmen oder einem Flansch der Karosserie eines Kraftfahrzeugs befestigbar ist, trägt zu einer einfachen Montage bei.

Um eine praxisgerechte Dichtwirkung zu erreichen, weist bevorzugt der Dichtungsabschnitt eine Hohlkammer auf.

Einzelheiten und weitere Vorteile der erfindungsgemäßen Dichtung ergeben sich aus der nachfolgenden Beschreibung eines bevorzugten Ausführungsbeispiels. In den das Ausführungsbeispiel lediglich schematisch darstellenden Zeichnungen veranschaulichen im einzelnen:
- Fig. 1: einen Querschnitt durch eine Dichtung;
- Fig. 2: einen Querschnitt gemäß Fig. 1 der an einem Türrahmen befestigten Dichtung.

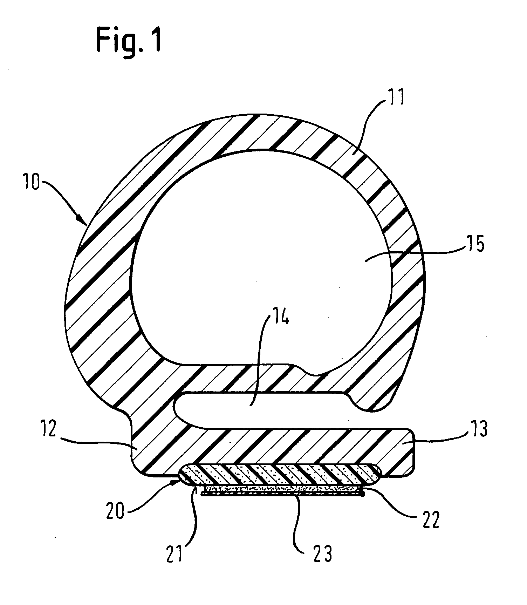

Die in Fig. 1 dargestellte Dichtung dient zum Abdichten einer Tür gegenüber der Karosserie eines Kraftfahrzeugs. Die Dichtung weist zu diesem Zweck einen Grundkörper 10 auf, der aus einem ersten elastisch verformbaren Werkstoff, beispielsweise EPDM, besteht. Der Grundkörper 10 ist mit einem Dichtungsabschnitt 11 und einem Befestigungsabschnitt 12 versehen. Der Dichtungsabschnitt 11 bildet eine Hohlkammer 15, wohingegen der Befestigungsabschnitt 12 eine Befestigungslippe 13 aufweist, die durch einen Spalt 14 von dem Dichtungsabschnitt 11 beabstandet ist. Der Spalt 14 ermöglicht eine einfache Handhabung der Dichtung im Rahmen einer vollautomatischen Fertigung, indem beispielsweise der Arm eines Roboters in den Spalt 14 eingreift, um die Dichtung zu befestigen.

Der Befestigungsabschnitt 12 ist durch Koextrusion mit einem Adhäsionskörper 20 verbunden, der an der dem Spalt 14 gegenüberliegenden Seite der Befestigungslippe 13 angeordnet ist. Der Adhäsionskörper 20 besteht aus einem zweiten elastisch verformbaren Werkstoff, der über eine zellige Struktur verfügt, beispielsweise Zellgummi. Zudem weist der Adhäsionskörper 20 eine Kontaktfläche 21 auf, auf die ein dauerklebriger Klebstoff 22, beispielsweise Epoxidharz, aufgetragen ist. Die Kontaktfläche 21 ist mit einer lösbaren Schutzfolie 23 bedeckt, die den Klebstoff 22 im nicht montierten Zustand der Dichtung schützt.

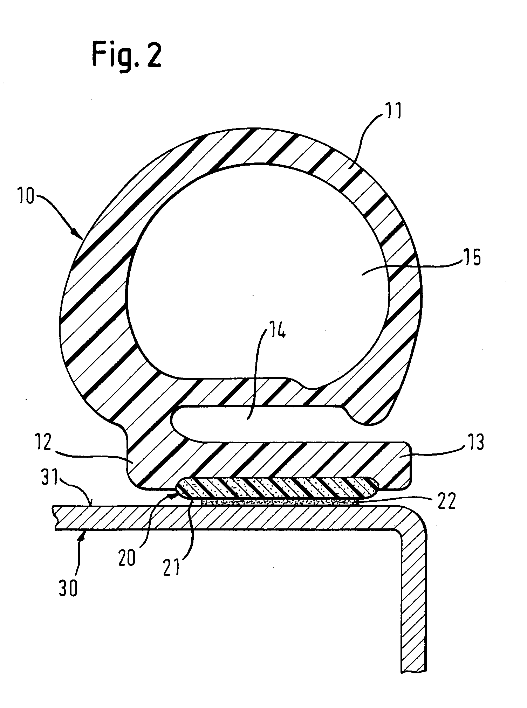

Wie in Fig. 2 zu erkennen ist, läßt sich der Adhäsionskörper 20 bei entfernter Schutzfolie 23 stoffschlüssig mit einem Türrahmen 30 verbinden. Der metallene Türrahmen 30 weist zu diesem Zweck eine Montagefläche 31 auf, die der Kontaktfläche 21 gegenüberliegt und durch Adhäsion mit dem Klebstoff 22 verbunden wird. Die Kontaktfläche 21 ragt aus der Ebene des Befestigungsabschnitts 12 vor, so daß Unebenheiten zwischen der Kontaktfläche 21 und der Montagefläche 31 durch die Verformungsfähigkeit des Adhäsionskörpers 20 kompensiert werden und sich eine gute Bindefähigkeit des Klebstoffs 22 ergibt. Zudem wird die durch den Klebstoff 22 gebildete Klebeverbindung entlastet. Die Scherzugfestigkeit und damit die Tragfähigkeit der Klebeverbindung wird auf diese Weise erhöht.

Die zuvor beschriebene Dichtung zeichnet sich durch eine in wirtschaftlicher Hinsicht verhältnismäßig kostengünstige Herstellung aus. Grund hierfür ist in erster Linie der durch Koextrusion zusammen mit dem Grundkörper 10 kontinuierlich gefertigte Adhäsionskörper 20, der zum einen sicherstellt, daß sich die Dichtung als für die Massenfertigung geeignetes Strangerzeugnis herstellen läßt. Zum anderen gewährleistet der Adhäsionskörper 20 auf Grund seiner zelligen Struktur eine wirksame Vernetzung mit den verschiedensten Arten an Klebstoff. Der Klebstoff 22 kann aus diesem Grund vornehmlich auf die Eigenschaften des Werkstoffs, aus dem der Türrahmen 30 gefertigt ist, abgestimmt werden, um eine gute Bindefähigkeit zu erreichen. Weiterhin läßt sich der Klebstoff 22 in einem kontinuierlichen Verfahren auf die Kontaktfläche 21 auftragen und mit der Schutzfolie 23 versehen, so daß sich vergleichsweise geringe Herstellungskosten ergeben. Hierzu trägt nicht zuletzt auch bei, daß die Dichtung das Vorsehen herkömmlicher Klebebänder, welche die Fertigungstiefe und damit die erzielbare Wertschöpfung verringern, entbehrlich macht.

### Bezugszeichenliste

- 10: Grundkörper
- 11: Dichtungsabschnitt
- 12: Befestigungsabschnitt
- 13: Befestigungslippe
- 14: Spalt
- 15: Hohlkammer

- 20: Adhäsionskörper
- 21: Kontaktfläche
- 22: Klebstoff
- 23: Schutzfolie

- 30: Türrahmen
- 31: Montagefläche

## Patentansprüche

1. Dichtung, insbesondere zum Abdichten einer Tür, einer Fensterscheibe oder des Dachs eines Kraftfahrzeugs, mit einem Grundkörper (10), der aus einem ersten elastisch verformbaren Werkstoff gefertigt ist und einen Dichtungsabschnitt (11) und einen Befestigungsabschnitt (12) aufweist, wobei der Befestigungsabschnitt (12) mit einem Adhäsionskörper (20) verbunden ist, durch den der Grundkörper (10) stoffschlüssig an einem Bauteil (30) festlegbar ist, **dadurch gekennzeichnet, daß** der Adhäsionskörper (20) aus einem zweiten elastisch verformbaren Werkstoff besteht, der über eine zellige Struktur verfügt, und eine Kontaktfläche (21) aufweist, auf die ein Klebstoff (22) aufgetragen ist, wobei der Grundkörper (10) und der Adhäsionskörper (20) koextrudiert sind.

2. Dichtung nach Anspruch 1, **dadurch gekennzeichnet, daß** der zweite elastisch verformbare Werkstoff Zellgummi ist.

3. Dichtung nach Anspruch 1 oder 2, **dadurch gekennzeichnet, daß** der erste elastisch verformbare Werkstoff ein thermoplastisches Elastomer, Ethylen-Propylen-Dien-Kautschuk oder ein siliciumhaltiger Kunststoff ist.

4. Dichtung nach einem der Ansprüche 1 bis 3, **dadurch gekennzeichnet, daß** der Klebstoff (22) dauerklebrig ist.

5. Dichtung nach einem der Ansprüche 1 bis 4, **dadurch gekennzeichnet, daß** die Kontaktfläche (21) mit einer lösbaren Schutzfolie (23) bedeckt ist.

6. Dichtung nach einem der Ansprüche 1 bis 5, **dadurch gekennzeichnet, daß** die Kontaktfläche (21) des Adhäsionskörpers (20) aus der Ebene des Befestigungsabschnitts (12) vorragt.

7. Dichtung nach einem der Ansprüche 1 bis 6, **dadurch gekennzeichnet, daß** der Befestigungsabschnitt (12) eine Befestigungslippe (13) aufweist, an welcher der Adhäsionskörper (20) angeordnet ist.

8. Dichtung nach einem der Ansprüche 1 bis 7, **dadurch gekennzeichnet, daß** der Dichtungsabschnitt (11) eine Hohlkammer (15) aufweist.
